Europäisches Patentamt

(19) European Patent Office

Office européen des brevets

(11) Numéro de publication: **0 037 337**

**B1**

(12) **FASCICULE DE BREVET EUROPEEN**

(45) Date de publication du fascicule du brevet: **19.06.85**

(21) Numéro de dépôt: **81400498.2**

(22) Date de dépôt: **27.03.81**

(51) Int. Cl.⁴: **A 01 C 7/04, A 01 C 7/08**

(54) **Dispositif distributeur pour semoir dit "monograine".**

(30) Priorité: **31.03.80 FR 8007190**
**13.08.80 FR 8017894**
**19.02.81 FR 8103317**

(43) Date de publication de la demande:
**07.10.81 Bulletin 81/40**

(45) Mention de la délivrance du brevet:
**19.06.85 Bulletin 85/25**

(84) Etats contractants désignés:
**AT BE CH DE GB IT LI LU NL SE**

(56) Documents cités:

**Néant**

(73) Titulaire: **Société SOGEFINA Société de Gestion**
**Financière Armoricaine (Société Anonyme)**
**49-51, rue de Ponthieu**
**F-75008 Paris (FR)**

(72) Inventeur: **Herriau, Paul**
**Rue Lucien Sampaix Proville**
**F-59400 Cambrai (FR)**

(74) Mandataire: **Lemonnier, André**
**Cabinet LEMONNIER 4, Boulevard Saint-Denis**
**F-75010 Paris (FR)**

Courier Press, Leamington Spa, England.

## Description

La présente invention concerne les semoirs dits "monograines" c'est-à-dire les semoirs qui permettent de semer les graines en les distribuant à des intervalles réguliers dans le sillon creusé dans le sol pour les recevoir.

L'organe essentiel des semoirs de ce type est le dispositif de distribution qui, théoriquement prélève les graines une à une dans une masse de graines et les amène à l'état individualisé à un dispositif de transport qui les conduit dans le sillon.

On a déjà proposé antérieurement des distributeurs rotatifs d'axe vertical comportant un plateau rotatif solidaire d'une paroi périphérique annulaire dans laquelle sont réalisés des perçages radiaux formant chambres pour les graines. Dans ces distributeurs, les graines sont chassées par la force centrifuge contre la paroi périphérique et pénètrent graine par graine dans les chambres dont le diamètre et la profondeur sont très peu supérieurs au diamètre d'une graine, les graines étant maintenues dans la chambre par une paroi périphérique fixe qui présente un orifice à l'endroit où la graine doit passer dans le dispositif de transport. Dans ces distributeurs, la force centrifuge doit être élevée pour que les graines pénètrent assez rapidement dans les chambres et en soient de même éjectées rapidement. Par contre, une force centrifuge élevée plaque les graines contre la paroi périphérique et risque de provoquer des manques. En outre du fait de la vitesse de rotation élevée, l'orifice dans la paroi fixe doit avoir un grand développement pour éviter le cisaillage de la graine et la longueur de ce développement ajoutée au développement périphérique nécessaire pour assurer une probabilité élevée de pénétration d'une graine dans une chambre, fait qu'un seul et même distributeur ne peut alimenter qu'un ou deux dispositifs de transport, c'est-à-dire distribuer les graines pour un ou deux sillons. Ce type de distributeur présente en outre des problèmes résultant de la variation de la masse de graines se trouvant sur le plateau rotatif.

On a également proposé dans le brevet allemand Botsch No 410.691 un distributeur pour semoir comportant un plateau rotatif d'axe vertical circulant au-dessus d'un plateau fixe, le plateau rotatif comportant à sa périphérie in des logements destinés à recevoir chacun une graine et le plateau fixe comportant des fenêtres avec lesquelles viennent en coincidence les logements pour que la graine se trouvant dans un logement puisse tomber dans le sillon. Dans ce dispositif il est prévu en amont de chaque fenêtre une lame racleuse qui retient les graines qui ne sont pas engagées dans les logements. Il s'est avéré qu'un tel dispositif donnait naissance à un pourcentage important de graines cisaillées entre la lame racleuse et le bord du logement ou entre le bord inférieur du logement et le plan supérieur de la fenêtre et qu'il y avait beaucoup de manques parce que les graines qui s'accumulent en avant de la lame racleuse forment un tas dans lequel les graines se trouvent suspendues au-dessus des évidements du plateau rotatif.

La présente invention a pour but de remédier à ces inconvénients et elle a pour objet un dispositif distributeur pour semoir monograine du type comportant un plateau rotatif se prolongeant par une couronne périphérique à axe de rotation sensiblement vertical, présentant à sa périphérie des logements sensiblement parallèles à l'axe de rotation et régulièrement répartis angulairement selon un cercle de cette couronne qu'ils traversent, la section horizontale de ces logement et l'épaisseur de la couronne correspondant sensiblement au volume d'une graine, la zone comportant les logements de cette couronne périphérique se déplaçant au-dessus d'un plateau fixe dans lequel sont réalisés, à l'aplomb de la trajectoire des logements du plateau rotatif, des orifices de mise en communication avec le dispositif de transport des graines distribuées jusqu'an sillon, un moyen de barrage étant prévu en amont de chaque orifice du plateau fixe pour retenir les graines non engagées dans les logements du plateau rotatif, caractérisé en ce qu'un moyen de freinage limitant l'épaisseur de la couche de graines sur la couronne périphérique est interpose sur le trajet des graines passant de la partie centrale du plateau rotatif sur laquelle sont alimentées les graines sur la partie de la couronne périphérique où est disposé le moyen de barrage.

Selon un mode de réalisation, la couronne périphérique du plateau rotatif dans laquelle sont réalisés les logements est séparée de la partie centrale du plateau par une paroi cylindrique fixe dans laquelle est réalisée, en amont de chaque moyen de barrage une fenêtre limitant l'épaisseur et le volume de la couche de graines sur la couronne périphérique portant les logements.

Avec ce mode de réalisation, les graines se trouvant en amont de chaque barrage et dont le volume et l'épaisseur de la couche sont limités du fait du freinage du débit assuré par le fenêtre, sont bousculées et roulent sur la surface de la couronne périphérique sur une zone assez étendue en amont du barrage ce qui, en combinaison avec une vitesse de rotation réduite de plateau, accroit la probabilité de chute d'une graine dans un logement, laquelle atteint presque 100%.

Le développement périphérique d'un poste de distribution étant réduit du fait que les trous de la couronne mobile peuvent être très rapprochés ce qui permet de réduire la vitesse de rotation pour un même espacement dans le temps des graines distribuées une pluralité de postes de distribution peuvent être répartis autour d'un même plateau et, en pratique, ce nombre peut être aussi élevé que douze, à savoir le nombre de rangs semés usuellement en un seul passage.

Selon une autre caractéristique, les fenêtres dans la paroi périphérique interne fixe sont constituées par des découpes de cette paroi cylindrique se prolongeant jusqu'au bord inférieur de cell-ci.

Avec ce mode de réalisation, les graines passent à travers les fenêtres par gravité, la masse de graines se trouvant au-dessus de la couronne en amont de chaque barrage étant limitée par le fait que les graines formant une couche sur la couronne s'opposent à l'éboulement de celles qui se trouvent à l'extérieur au droit de la fenêtre, le bourrage au droit de la fenêtre étant évité par la rotation du plateau.

Le distributeur tel que ci-dessus fonctionne parfaitement avec des graines ayant des dimensions et des formes homogènes telles que les graines de betteraves entrobées qui se présentent sous forme de sphéroïdes réguliers qui s'adaptent parfaitement dans les logement du plateau rotatif, notamment lorsque ces logements sont des trous cylindriques, une deuxième graine susceptible de constituer un double étant engagée sur une hauteur très inférieure à son rayon, ce qui permet au moyen formant barrage de la retenir en l'extrayant du trou au droit duquel elle se trouve sans risquer de la briser.

Dans le cas graines irrégulières comme les graines nues qui ont une forme s'approchant d'un hémi-sphéroïde avec un diamètre de base à peu près régulier et une épaisseur maximale de l'ordre du rayon, deux demi-sphéroïdes accolés par leur base peuvent s'engager dans un même trou sans faire saillie au-dessus du plateau rotatif, si les trous ont un diamètre égal au diamètre d'un hémi-sphéroïde et si l'épaisseur du plateau rotatif est égale à ce diamètre. Une solution serait de réduire l'épaisseur de plateau pour la rendre égale sensiblement à l'épaisseur de l'hémi-sphéroïde mais, sauf si le plan aléatoire d'accolement des deux graines est sensiblement confondu avec la surface supérieure de plateau rotatif, soit on ne peut éviter le double parce que le plan d'action du moyen formant barrage est trop élevé ou celui-ci est trop souple pour extraire le double supérieur du trou, soit on broie au moins l'une des deux graines entre le moyen formant barrage et l'arête supérieure du trou.

Selon une autre caractéristique de l'invention et pour remédier à ces inconvénients l'épaisseur de plateau rotatif au droit des logements est inférieure à la dimension maximale d'une graine, la couronne fixe comportant une gorge à l'aplomb du cercle de répartition des logements, la section de cette gorge étant telle qu'une graine ne peut s'y engager que partiellement, la distance entre le bord externe de cette gorge et la génératrice du logement la plus centrale étant inférieure à la dimension maximale d'une graine mais supérieure à sa dimension minimale.

De préférence, la somme de l'épaisseur du plateau au droit des logements et de la profondeur de la gorge est inférieure à la somme de la plus grande dimension d'un graine et de la moitié de sa plus petite dimension. Par plus grande et plus petite dimension d'une graine on entend les valeurs moyennes du lot de graines calibrées mis en oeuvre pour le semis.

Avec la caractéristique ci-dessus une graine ne peut s'engager dans la gorge du plateau fixe que si sa plus grande dimension est sensiblement verticale pour qu'elle puisse passer entre le bord de la gorge et la paroi hémi-cylindrique centrale du logement faisant face à ce bord et, dans ce cas, la graine susceptible de former un double qui lui est superposé dans le logement fera, même à plat, saillie au-dessus du bord du trou de plus de la moitié de son épaisseur, ce que facilitera son éjection par le moyen formant barrage.

Selon une autre caractéristique destinée à faciliter l'éjection des doubles, chacun des logements du plateau rotatif présente un dégagement vers la périphérie du plateau rotatif. Par dégagement on entend le fait qu'une partie de la paroi du trou dirigée vers la périphérie est supprimée ou forme un plan incliné. Dans le premier cas le trou formera une encoche débouchant à la périphérie du plateau rotatif.

Selon une autre caractéristique le moyen de barrage est orienté pour déplacer les graines formant double selon la direction centrifuge, la paroi périphérique entourant la périphérie du plateau rotatif étant interrompue immédiatement en amont du moyen formant barrage et an aval du moyen de freinage du débit des graines pour permettre la chute des graines formant doubles, qui ont passé le moyen de freinage et qui sont attêtées par le moyen de barrage, dans la trémie.

Pour réduire la poussée des graines contre le moyen de barrage assurant l'évacuation des doubles et réduire le débit des graines ramenées dans la trémie par celui-ci, le moyen de freinage est constitué par un second moyen de barrage dont le plan d'action est situé à un niveau légèrement supérieur à celui du premier moyen de barrage lequel est disposé en amont du premier. De préférence, ce second moyen de barrage déplace les graines selon une direction centripète pour les ramener dans la partie centrale de plateau rotatif.

Selon une autre caractéristique et pour assurer un meilleur entrainement des graines sans risque de cisaillement, les parois verticales des logements réalisés dans le plateau rotatif se prolongent partiellement à l'intérieur de la gorge du plateau fixe. Ceci peut être obtenu en pratique en réalisant sous le plateau rotatif une nervure concentrique s'engageant dans la gorge présentant une section telle qui ci-dessus définie.

Selon un mode de réalisation préférentiel la face inférieure de la couronne périphérique du plateau rotatif entre le cercle passant par les génératrices intérieures des logements et la périphérie, a une forme tronconique convexe, les logements formant une encoche débouchant à la périphérie et le bord du plateau fixe, entre la gorge et la périphérie, ayant une forme tronconique concave s'adaptant à la forme tronconique convexe de la face inférieure du plateau rotatif. Avec cette forme de réalisation les zones de la couronne tronconique convexe du plateau rotatif subsistant entre les logements en forme d'encoches circulent dans la gorge du plateau fixe pour assurer l'entrainement des graines sélectionnées par appui au droit de leur zone équatoriale, ce qui évite tout risque de broyage et l'éjection des graines formant doubles est facilitée par le plan incliné que constitue le bord tronconique concave du plateau fixe. En effet, d'une part, la graine se trouve progressivement amenée de plus en plus en saillie au fur et à mesure qu'elle est repoussée ver l'extérieur par le moyen formant barrage et donc de plus en plus en appui contre ce moyen formant barrage.

Selon un autre mode réalisation le plateau fixe présente entre le moyen de freinage amont et le moyen de barrage aval situé en amont du dispositif de transport, dans la zone dite d'élimination des doubles, un bord périphérique, au delà de la paroi extérieure de la gorge, dont la surface est inclinée vers le bas et vers l'extérieur. Avec ce mode de réalisation les graines en double tendent à tomber automatiquement vers l'extérieur sous l'effet de leur poids et de la force centrifuge alors que les graines engagées dans la gorge y restent parfaitement maintenues.

Les moyens de barrage et de freinage peuvent être constitués par une paroi fixe rigide ou souple, un balai ou un rideau gazeux.

Toutefois on a constaté en ce qui concerne notamment le moyen de barrage qu'une paroi souple ou un balai ne présentait pas en raison de leur déformabilité un pouvoir suffisamment certain d'élimination des doubles, certaines graines en double pouvant être coincées mécaniquement dans la gorge et l'encoche, et qu'un rideau gazeux pouvait créer dans la gorge une surpression susceptible de chasser les graines en amont de leur logement, ce qui donne des manques.

Avec la caractéristique ci-dessus selon laquelle la surface du bord périphérique est inclinée vers le bas et vers l'extérieur dans la zone d'élimination des doubles, le moyen de barrage n'a plus à éliminer que quelques rares graines et le moyen de freinage en amont de la zone d'élimination des doubles peut être constitué par un goulet ou un tunnel qui laisse passer un flux réduit mais continu de graines à l'aplomb de la gorge du plateau fixe. Il s'est avéré que l'on réduisait ainsi le nombre des manques.

Selon une autre caractéristique, le moyen de barrage est constitué par une paroi fixe ayant un profil amont en "versoir de charrue", savoir une surface amont sensiblement verticale au droit du bord interne de la gorge et qui va, en s'évasant et en s'inclinant vers l'arrière, vers la périphérie. Avec cette forme l'arête inférieure de la paroi fixe ne peut pratiquement pas venir au contact d'une graine et la cisailler et on évite les doubles dus à la souplesse des barrages constituées par des balais.

Une autre caractéristique qui a pour but essentiel de simplifier la réalisation du distributeur résulte de la remarque que la gorge du plateau fixe ne participe à la sélection des graines que par sa paroi périphérique externe qui maintient les graines contre une chute vers l'extérieur tout en laissant basculer celles susceptibles de former des doubles. Selon cette caractéristique, la paroi périphérique interne de la gorge du plateau fixe est supprimée et la paroi intérieure des encoches du plateau rotatif se prolonge vers le bas en dessous du niveau du bord supérieur de la paroi périphérique externe, de preference jusqu'à proximité du fond du plateau fixe.

D'autres avantages de la présente invention apparaitront à la lecture de la description de divers modes de réalisation d'un semoir conforme à la présente invention faite ci-après avec référence aux dessins ci-annexés dans lesquels:

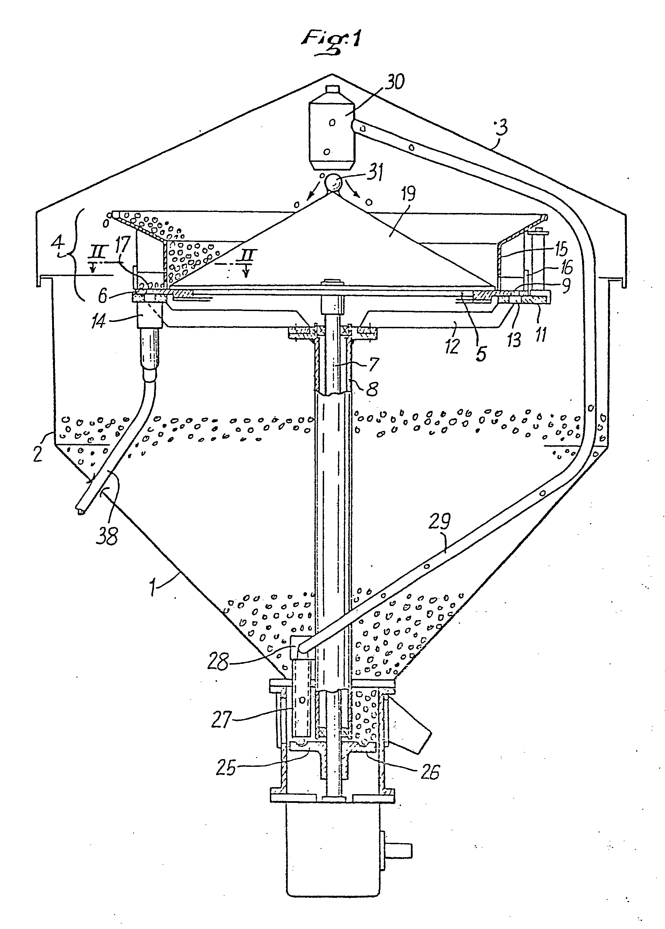

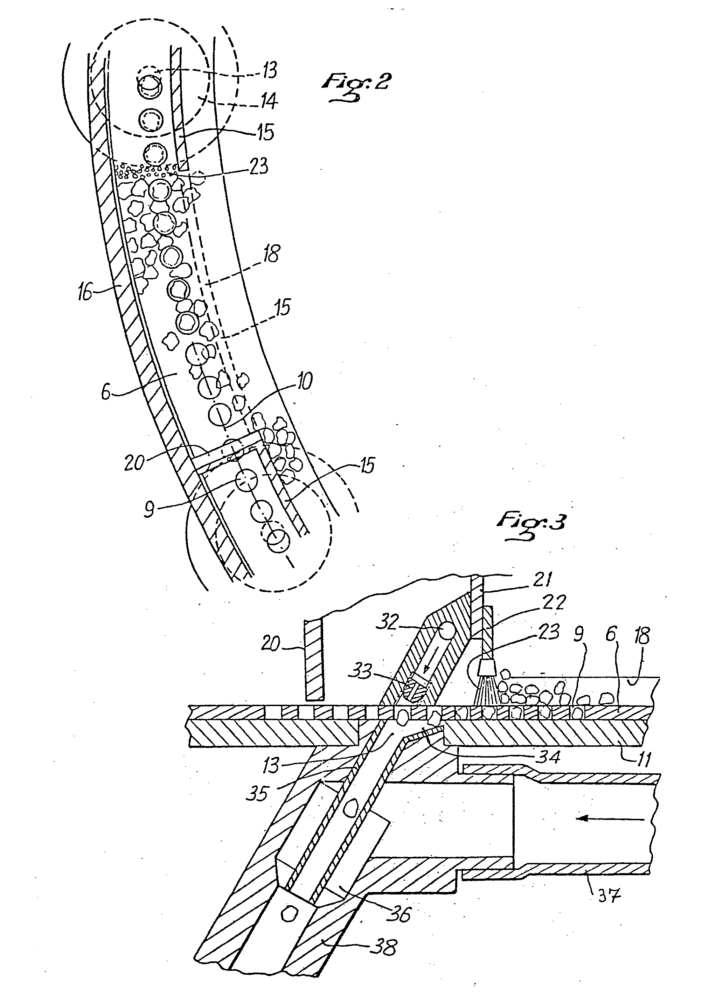

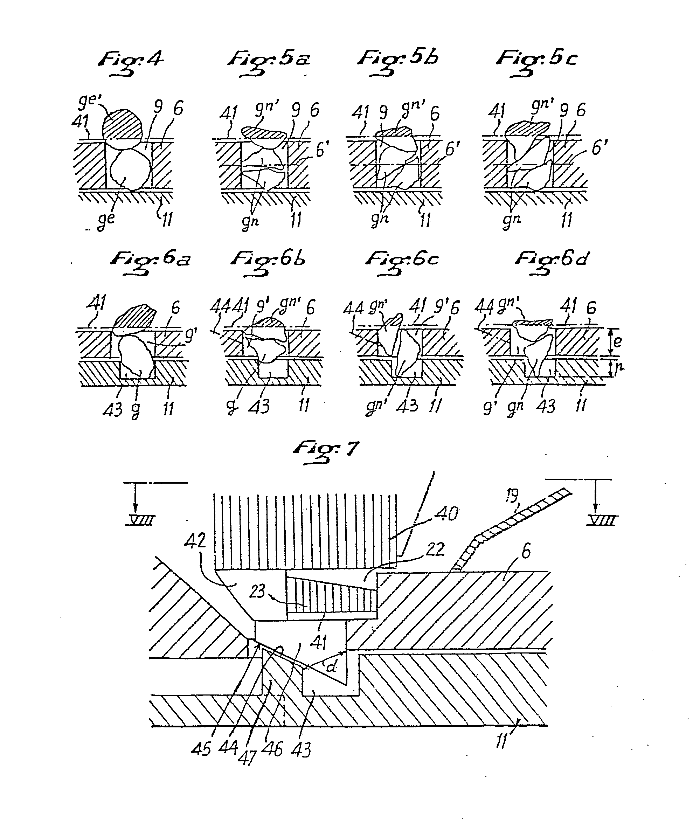

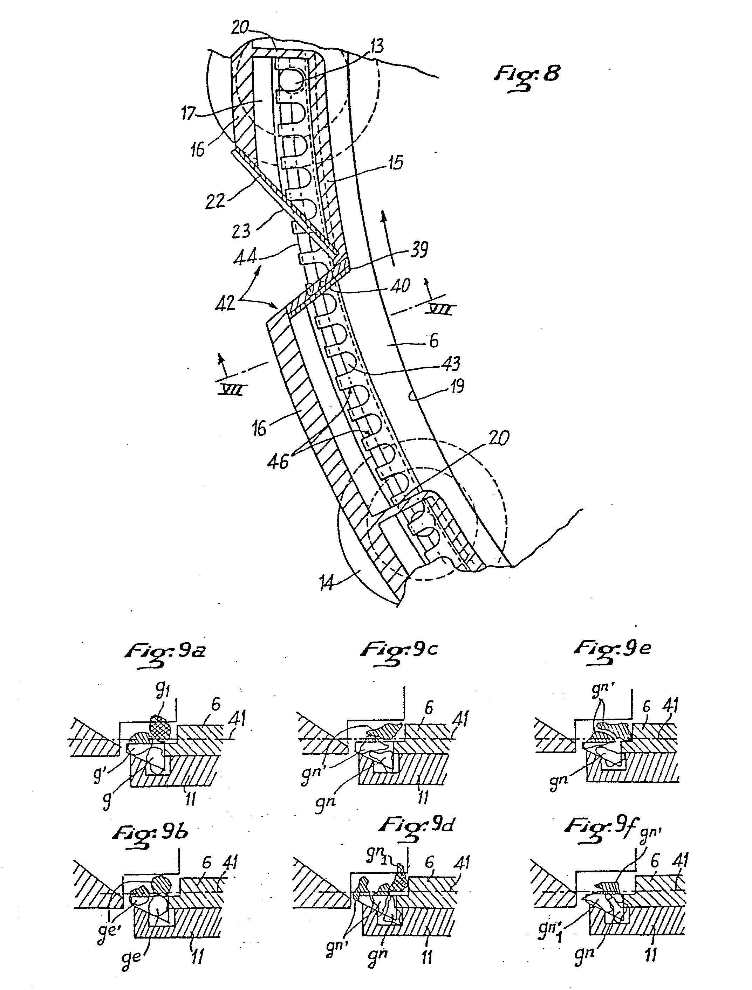

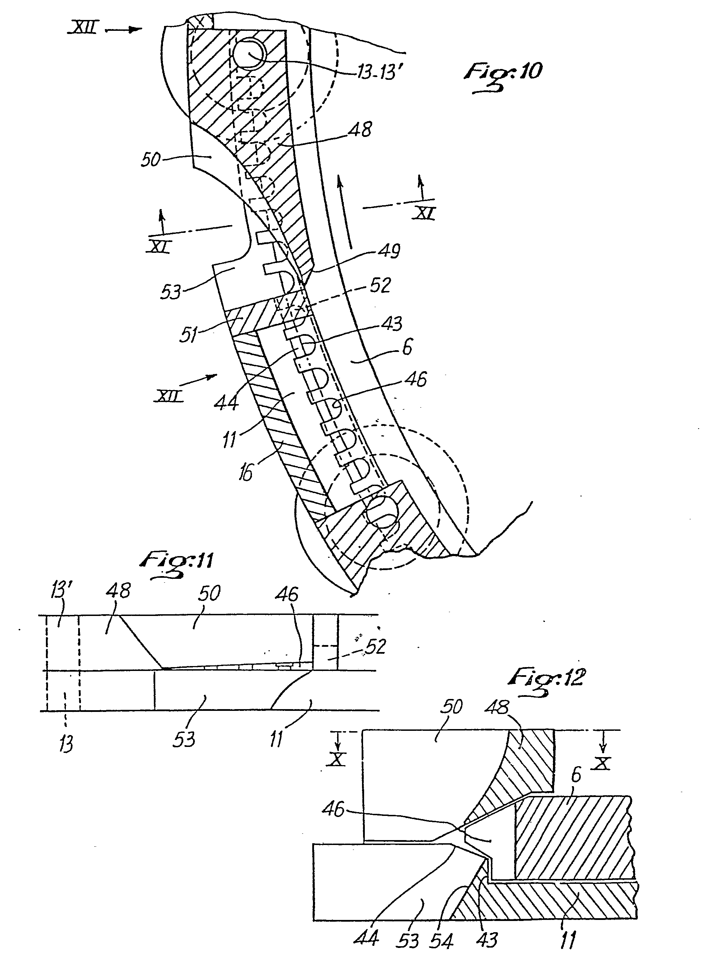

La figure 1 est une vue schématique en élévation latérale et coupe de la trémie d'un semoir comportant, représenté très schématiquement, un élément distributeur conforme à l'invention; la figure 2 est une vue en coupe en plan partielle par II—II de figure 1 d'une partie du dispositif distributeur selon un premier mode de réalisation, la figure 3 en est une vue en coupe développée en coupe verticale selon la cercle passant par les axes des logements du distributeur; la figure 4 représente schématiquement une vue de détail illustrant l'action du moyen de barrage sur des graines du type enrobé dans un distributeur selon les figures 2 et 3; les figures 5a à 5c correspondent à la figure 4 dans le cas de graines de betteraves non enrobées; les figures 6a à 6d correspondent aux figures 5 dans le cas d'un distributeur selon un second mode de réalisation comportant des trous ronds dans le plateau rotatif; la figure 7 est une vue en coupe radiale schématique à plus grande échelle par VII—VII de figure 8 d'un autre mode de réalisation de l'invention; la figure 8 en est une vue en plan en coupe partielle par VIII—VIII de figure 7; les figures 9a à 9f illustrent l'action de sélection du distributeur des figures 7 et 8 pour différentes formes de graines; la figure 10 est un vue en plan d'une partie de la périphérie du distributeur selon encore un autre mode de réalisation, représentée en coupe par X—X de figure 12; la figure 11 est une vue en coupe à plus grande échelle par XI—XI de figure 10 et la figure 12 est une vue en élévation latérale développée par XII—XII de figure 10.

La figure 1 est destinée à illustrer schématiquement un semoir comportant un dispositif distributeur conforme à l'invention et plus spécialement un dispositif distributeur monté dans une trémie centrale 1 de forme sensiblement pyramidale et de grande capacité permettant de semer simultanément jusqu'à douze rangs de graines de betteraves, de maïs ou similaire. Cette trémis comporte un corps 2 pour recevoir les graines et un couvercle 3 permettant le remplissage de la trémie. Dans la partie haute de la trémie est positionné un élément distributeur 4. Cet élément distributeur est constitué par un plateau rotatif 5 se prolongeant par une couronne périphérique 6. Le plateau 5 est monté à rotation sur un axe vertical 7 monté dans un manchon vertical 8 débouchant à l'extrémité inférieure de la trémie.

Cet axe 7 est entrainé en rotation par l'intermédiaire d'un système de transmission de type connu tel qu'un système à pignons et à chaine ainsi que d'une boite de vitesses depuis une des roues motrices de sorte que sa vitesse de rotation soit proportionnelle à la vitesse d'avancement du semoir. La couronne périphérique 6 présente dans la mode de réalisation des figures 1 à 3 des trous 9 d'axes sensiblement parallèles à l'axe de rotation qui sont régulièrement répartis angulairement selon un cercle 10 de la couronne 6. Le diamètre des trous 9 et l'épaisseur de la couronne 6 correspondent sensiblement au diamètre d'une graine et le plateau rotatif 5 est monté de manière amovible sur l'axe 7 pour pouvoir changer le plateau rotatif 5 et l'adapter aux graines à semer. La zone de la couronne périphérique 6 comportant les trous 9 est entrainée en rotation au-dessus d'une couronne fixe 11 qui est montée par l'intermédiaire de bras supports 12 sur le manchon vertical 8. La couronne fixe 11 comporte au droit de la trajectoire des trous 9 de la couronne mobile 6, au moins un orifice 13 qui communique avec l'entrée d'un dispositif de transport 14. Dans le mode de réalisation représenté douze orifices 13 sont prévus en étant régulièrement espacés angulairement sur la couronne 11, ce qui permet d'alimenter douze dispositifs de transport 14 et en conséquence de pouvoir semer jusqu'à douze rangs.

Dans le mode de réalisation des figures 2 et 3, deux parois fixes interne et externe 15, 16 délimitent radialement la couronne 11 au niveau des orifices 13 de manière à définir des postes de distribution 17. D'autre par, la paroi fixe interne 15 comporte en amont de chaque poste de distribution 17, une fenêtre 18 formée par une découpe du bord inférieur de la paroi interne 15. Il est possible de prévoir un dispositif d'obturation non représenté qui permet de fermer complétement ou en partie la fenêtre 18, et en conséquence soit de mettre hors service le poste de distribution correspondant ce qui permet de régler le nombre de rangs à semer, soit de limiter le débit des graines à travers la fenêtre. De plus, sur la partie central du plateau 5 est fixé solidairement un élément en cône 19 qui entraine, du fait de sa rotation, les graines déversées au-dessus de cette partie vers la paroi fixe interne 15 de manière à faire passer les graines par gravité à travers les fenêtres 18. Le poste de distribution 17 qui est délimité par les parois fixes interne et externe et par deux parois perpendiculaires avant et arrière 20, 21 comporte une plaque formant barrage 22 positionnée perpendiculaire à la couronne 6 en amont de l'orifice 13. Cette plaque 22 comporte à sa partie inférieure un moyen éliminant les doubles tel qu'une brosse 23 ou similaire. Les graines qui sont passées à travers la fenêtre 18 viennent s'accumuler contre la paroi formant barrage 22 et contre la brosse 23. Là, les graines dont le volume est limité du fait du freinage du débit assuré par la fenêtre 18, sont bousculées et roulent sur la surface de la couronne mobile 6;

d'autre part la vitesse de rotation du plateau 5 portant la couronne 11 est choisie de manière à être suffisamment lente pour favoriser la chute d'une graine dans chaque trou 9 de la couronne 6 dans la zone se trouvant en amont du barrage 23—13.

Dans le semoir illustré les graines sont amenées en excès au-dessus du plateau rotatif 5 entouré par une paroi cylindrique 15 prolongée enhaut par une partie évaseé et les graines en excès retombent à la periphérie de la partie évasée directement dans la trémie.

Dans le mode je réalisation illustré à la figure 1 les graines sont alimentées depuis la trémie sur le plateau rotatif 5 par un dispositif d'amenée des graines qui est pneumatique. Dans la partie de fond de la trémie 1 est monté sur l'axe 7, un disque rotatif 25. Ce disque rotatif 25 est muni sur sa surface supérieure d'une gorge circulaire 26 présentant un diamètre et une profondeur sensiblement égale au diamètre d'une graine. Le disque est entrainé en rotation en-dessous de la masse des graines remplissant le fond de la trémie 1 est des graines sont en conséquence entrainées dans la gorge 26. Au-dessus de la gorge 26 est placé un élément de tube vertical 27 dans lequel sont aspirées les graines se trouvant dans la gorge 26. L'élément de tube vertical 27 débouche dans une chambre de prise en charge 28 de la graine et la graine est propulsée par de l'air sous pression dans un tuyau de transfert 29 jusque dans un cyclone 30 positionné au-dessus de la partie centrale du plateau rotatif 5. Les graines retombent alors par gravité sur un répartiteur formé par une sphère 31 positionnée au sommet de l'élément en cône 19 pour améliorer la répartition des graines vers les différents dispositifs de distribution.

Dans le mode de réalisation de la figure 3, pour améliorer l'expulsion de la graine hors du trou 9 de la couronne 6 dans le dispositif de transport, un tube d'arrivée d'air 32 comportant un gicleur 33 est monté dans chaque poste de distribution au niveau dudit orifice 13. D'autre part, pour favoriser le dégagement de la graine une gorge 34 de profondeur progressivement croissante est réalisée sur la face supérieure de la couronne fixe 11 entre un point en aval de la plaque formant barrages 22 et l'orifice 13 communiquant avec le dispositif de transport. Le dispositif de transport est constitué par un élément de tube 35 dans lequel est expulsée la graine par l'air envoyé par le gicleur 33. Cet élément de tube 35 se termine au col d'un Venturi 36 coaxial audit élément de tube, Venturi qui est connecté à un tuyau 37 d'arrivée d'air et qui propulse la graine dans une conduite 38 allant à un soc de semoir.

Dans le mode de réalisation des figures 7 et 8 et en général dans les figures 4 à 9, les mêmes références désignent les mêmes éléments ou des éléments équivalents.

Dans le mode de réalisation des figures 7 et 8 une paroi amont 39 qui porte une brosse ou similaire 40 est substituée à la fenêtre 18 pour limiter le flux des graines qui arrivent au barrage 22 d'élimination des doubles. Cet élément 39 qui est disposé au-dessus de la couronne 6 entre les parois 15 et 16 est incliné pour repousser les graines selon la direction centripète et éviter une accumulation des graines en amont de cet élément. En outre un barrage constitué par une paroi 22 et une brosse 23 est prévu en aval de ce permier barrage et an amont du poste de distribution 17, le bord actif 41 de la brosse étant sensiblement au niveau de la surface supérieure de la couronne 6 et pouvant en pratique frotter sur celle-ci. De préférence et comme représenté à la figure 8, ce moyen formant barrage est disposé obliquement pour chasser les graines vers la périphérique du distributeur de manière à les faire retomber dans le trémie à travers une fenêtre 42 réalisée par une interruption de la paroi périphérique externe 16.

Si, comme représenté dans les figures 4 et 5, les trous 9 ont un diamètre légèrement supérieur à la plus grande dimension de la graine $g$ et si le plateau rotatif 6 une épaisseur égale à ce diamètre, le plateau fixe étant plan, une graine enrobée $ge$ ou deux graines nues $gn$ pourront se loger en pratique dans ce trou sans faire saillie au-dessus de plateau rotatif et elles échapperont en pratique au bord inférieur 41 du barrage 22—23 (figures 4 et 5). Les graines superposées $ge'$ et $gn'$ qui ont passé sous le premier élément de freinage du débit des graines 39—40 seront accrochées par le bord inférieure 41 du deuxième barrage 22—23 mais dans le cas illustré dans les figures 5b et 5c où le cercle de base de grand diamètre des graines nues $gn'$ est engagé danq le trou 9, il existe un risque d'accrochage et de broyage de la graine $gn'$. On voit donc que le distributeur dont les logements sont constitués par des trous cylindriques comme décrit aux figures 2 et 3 a toutes chances de bien fonctionner avec des graines enrobées de diamètre adéquat mais qu'il existe de grandes probabilités de doubles et des risques de broyage dans le cas de graines nues en hémi-sphéroïdes ayant une dimension maximale égale à ce diamètre. Si, pour les graines nues, on réduit l'épaisseur du plateau comme en 6' dans les figures 5, le risque de doubles sera réduit mais la graine $gn$ inférieure, surtout lorsqu'elle sera plus redressée que dans les figures 5b et 5c, risque de faire saillie au-dessus du plan 6' et d'être extraite du trou, ce qui provoque un manque, ou d'être écrassée ou cisaillée contre l'arête du trou.

Pour remédier à ces inconvénients et comme illustré dans les figures 6, une gorge concentrique 43 est réalisée dans la face supérieure du plateau fixe 11. La section de cette gorge est telle qu'une graine ne peut s'y engager que partiellement et la distance $d$ (figure 7) entre le bord externe de cette gorge et la génératrice la plus centrale du trou 9 est inférieure à la dimension maximale (plus grand diamètre) d'une graine mais supérieure à sa dimension minimale. Avec cette forme de la gorge et comme illustré dans les figures 6a, 6c et 6d, une graine ne peut s'engager dans la gorge qu'avec sa plus grande dimension orientée sensiblement verticalement. Si de plus, l'épaisseur du plateau rotatif 6 est telle que la somme de l'épaisseur $e$ du plateau rotatif 6 et de la profondeur $p$ de la gorge est inférieure à la somme de la plus grande dimension d'une graine et de la moitié de sa plus petite dimension, la deuxième graine $gn'$ des figures 6c et 6d s'appuiera sur la surface supérieure du plateau 11 ou sur la graine $gn$ occupant la gorge et fera suffisamment saillie au-dessus de la surface supérieure du plateau 6 pour être éjectée par le bord inférieur 41 de l'élément formant barrage. Il en est de même pour une graine ovoïde $g'$ (figure 6a) ou pour une graine $gn'$ (figure 6b) superposée à une graine $gn$ engagée à plat dans le trou 9' du plateau 6 sans pénétrer pratiquement dans la gorge 43. Cette éjection sera facilitée si le trou 9' débouche en direction de la périphérie du plateau rotatif ou s'il présente un bord rabattu formant plan incliné 44 dans ladite direction.

Dans le mode de réalisation illustré dans les figures 7 et 8, la partie périphérique 45 de la couronne 6 a une forme tronconique convexe vers le bas et les trous 9' sont remplacés par des encoches 46 à fond cylindrique débouchant à la périphérie de la couronne, la largeur de ces encoches étant, comme le diamètre d'un trou 9, légèrement supérieure à la plus grande dimension d'une graine. La paroi périphérique 47 délimitant la gorge 43 a un bord supérieur 44 tronconique concave pour coopérer avec la surface inférieure de la partie périphérique 45.

Avec cette forme de réalisation et comme illustré dans les figures 9a à 9f, une seule graine $g$, $ge$ ou $gn$ qu'elle soit ovoïde (figure 9a), en sphèroïde (figure 9b) ou en hémi-sphéroide (figures 9c à 9f) peut s'engager dans une encoche 46 et éventuellement la gorge 43 sans faire saillie au-dessus de la surface supérieure. En conséquence, les graines risquant de former des doubles seront éjectées les graines $g_1$ et $gn_1$ (figures 9a et 9d) par l'élément de freinage 39, 40 et les graines $g'$, $ge'$ et $gn'$ par l'arête 41 du barrage 22, 23. C'est seulement dans les cas très particuliers d'une graine $gn$ de faibles dimensions qu'une graine $gn_1'$ (figure 9f) risque de ne pas être éjectée par le bord 41 et de former un double quoiqu'elle ait beaucoup de chance d'être entrainée par la graine $gn'$ qui va être chassée radielement.

Dans le mode de réalisation des figures 10 à 12, les mêmes références désignent les mêmes éléments.

Dans le mode de réalisation des figures 10 à 12, le poste de distribution au droit duquel les graines sont amenées à l'orifice 13 d'entrée du dispositif de transport est constitué par une pièce massive 48 qui délimite par sa surface intérieure le plateau de la couronne rotative et dans laquelle est réalisé un forage 13' en coincidence avec l'orifice 13 pour constituer l'orifice d'aspiration du Venturi du dispositif de transport. Vers l'amont la pièce 48 présente un plan coupé 49 qui renvoie vers l'intérieure les graines qui n'ont pas trouvé le passage par le goulet ou tunnel dont il sera parlé ci-après et une surface gauche en versoir de soc 50 dirigée vers l'extérieur et qui chasse des encoches 46 les graines formant des doubles comme cela sera expliqué ci-après. Immédiatement en amont de la pièce 48 est montée une cloison radiale 51 qui va de la paroi périphérique 16 à l'arête du pan coupé 49 de la pièce 48. Le coin inférieurvoisin du pan coupé 49 de cette cloison 51 est découpé, au droit des encoches 46 et de la gorge 43, en 52 pour permettre le libre passage des graines. Immédiatement en aval de la paroi 51, le bord du plateau fixe 11 est entaillé en 53 comme nettement visible sur le dessin pour former un plan incliné 54 aboutissant au sommet de la paroi extérieure 43 de l'emboitement du plateau rotatif 6 dans le plateau fixe 11. De ce fait les graines qui ont passé dans le tunnel 52 en étant en appui sur la surface tronconique concave 44 sans être engagées dans l'espace délimité par l'encoche 46 et la paroi 43 en-dessous du bord supérieur de cette dernière, ne vont plus être soutenues et retombent, le long du plan incliné 54, dans la trémie qui se trouve en dessous du distributeur. Si une graine qui n'est pas engagée dans l'espace ce-dessus se trouve coincée par la graine engagée derrière la paroi 43 contre la paroi de l'encoche 46 tout en faisant saillie au-dessus du bord supérieur de la couronne 6, elle vient au contact de la surface 50 qui la fait basculer vers l'extérieur sur le plan incliné 54. La position de ces graines étant instable, elles ne risquent pas d'être cisaillées par l'arête inférieure de la surface 50.

## Revendications

1. Un dispositif distributeur (4) pour semoir monograine du type comportant un plateau rotatif (5) de prolongeant par une couronne périphérique (6) à axe de rotation sensiblement vertical, présentant à sa périphérie des logements (9, 46) sensiblement parallèles à l'axe de rotation et régulièrement répartis angulairement selon un cercle (10) de cette couronne qu'ils traversent, la section horizontale de ces logements et l'épaisseur de la couronne correspondant sensiblement au volume d'une graine, la zone de cette couronne périphérique comportant les logements de déplaçant au-dessus d'un plateau fixe (11) dans lequel sont réalisés, à l'aplomb de la trajectoire des logements (9) du plateau rotatif, des orifices (13) de mise en communication avec un dispositif de transport (14) des graines distribuées jusqu'au sillon, un moyen de barrage (23, 50) étant prévu au-dessus de la couronne périphérique (6) en amont de chaque orifice du plateau fixe pour retenir les graines non engagées dans les logements du plateau rotatif, caractérisé en ce qu'un moyen de freinage (18, 39, 52) limitant l'épaisseur de la couche de graines sur la couronne périphérique (6) est interposé sur le trajet des graines passant de la partie centrale du plateau rotatif (5) sur laquelle sont alimentées les graines à la partie de la couronne périphérique (6) où est disposé le moyen de barragè (23, 50).

2. Un dispositif distributeur selon la revendication 1, caractérisé en ce que la couronne périphérique (6) du plateau rotatif dans laquelle sont réalisés les logements (9) est séparée de la partie centrale du plateau par une paroi cylindrique (15) fixe disposée au-dessus et dans laquelle est réalisée, en amont de chaque moyen de barrage, une fenêtre (18) constituant le moyen de freinage limitant l'épaisseur et le volume de la couche de graines sur la couronne périphérique (6) portant les logements.

3. Un dispositif distributeur selon la revendication 2, caractérisé en ce que les fenêtres (18) dans la paroi périphérique interne (15) fixe sont constituées par des découpes de cette paroi cylindrique (15) so prolongeant jusqu'au bord inférieur de cell-ci.

4. Un dispositif distributeur selon la revendication 1, caractérisé en ce que l'épaisseur du plateau rotatif (5) au droit des logements est inférieure à la dimension maximale d'une graine, le plateau fixe (11) comportant une gorge (43) à l'aplomb de cercle de répartition des logements (9), la section de cette gorge étant telle qu'une graine ne peut s'y engager que partiellement, la distance ($d$) entre le bord externe de cette gorge et la génératrice du logement la plus centrale étant inférieure à la dimension maximale d'une graine mais supérieure à sa dimension minimale.

5. Un dispositif distributeur selon la revendication 4, caractérisé en ce que la somme de l'épaisseur ($e$) du plateau rotatif (6) au droit des logements et de la profondeur ($p$) de la gorge (43) est inférieure à la somme de la plus grande dimension d'une graine et de la moitié de sa plus petite dimension.

6. Un dispositif distributeur selon la revendication 4, caractérisé en ce que chacun des logements (9) du plateau rotatif (5) présente un dégagement vers la périphérie du plateau rotatif.

7. Un dispositif distributeur selon la revendication 4, caractérisé en ce que le moyen de barrage (22—23) est orienté pour déplacer les graines formant double selon la direction centrifuge, une paroi fixe périphérique (16) entourant la périphérie du plateau rotatif étant interrompue (en 42) immediatement en amont du moyen formant barrage (22—23) et en aval du moyen de freinage (39) pour permettre la chute des graines formant doubles, qui ont passé le moyen de freinage et qui sont arrêtées par le moyen de barrage, dans la trémie.

8. Un dispositif distributeur selon la revendication 7, caractérisé en ce que le moyen de freinage est constitué par une second moyen de barrage (39) dont le plan d'action est situé à un niveau légèrement supérieur à celui du premier moyen de barrage (22) et qui est disposé en amont du premier.

9. Un dispositif distributeur selon la revendication 8, caractérisé en ce que le second moyen de barrage (39) déplace des graines selon une direction centripète pour les ramener de la couronne périphérique (6) sur la partie centrale du plateau rotatif (5).

10. Un dispositif distributeur selon la revendication 4, caractérisé en ce que les parois verticales des logements (9) réalisés dans le plateau rotatif (5) se prolongent partiellement à l'intérieur de la gorge (43) du plateau fixe (11).

11. Un dispositif distributeur selon la revendication 4, caractérisé en ce que la face inférieure (45) de la couronne périphérique (6) du plateau rotatif entre le cercle passant par les génératices intérieures des logements et la périphérie, a une forme tronconique convexe, les logements formant une encoche (46) débouchant à la périphérie du plateau rotatif et le bord (44) du plateau fixe (11), entre la gorge (43) et la périphérie, ayant une forme tronconique concave s'adaptant à la forme tronconique convexe de la face inférieure du plateau rotatif (5).

12. Un dispositif distributeur selon la revendication 4, caractérisé en ce que le plateau fixe (11) présente entre le moyen de freinage (52) et le moyen de barrage (50) situé en amont du dispositif de transport des graines distribuées jusqu'au sillon, un bord périphérique, au delà de la paroi extérieure de la gorge (43), dont la surface (54) est inclinée vers le bas et vers l'extérieur.

13. Un dispositif distributeur selon la revendication 4, caractérisé en ce que le moyen de barrage est constitué par une paroi fixe (50) ayant un profil amont en "versoir de charrue", savoir une surface amont sensiblement verticale au droit du bord interne de la gorge (43) et qui va en s'évasant et en s'inclinant vers l'arrière, vers la périphérie.

14. Un dispositif distributeur selon la revendication 10, caractérisé en ce que les parois verticales des logements (9—46) réalisés dans le plateau rotatif (5) se prolongent vers le bas en dessous du niveau du bord supérieur de la paroi périphérique externe délimitant la gorge (43) dont le fond est constitué par la partie périphérique du plateau fixe (11) située en-dessous des logements en forme d'encoches débouchant sur la périphérie (46) réalisés dans le plateau rotatif (5).

**Patentansprüche**

1. Verteilvorrichtung für eine Einzelkornsämaschine mit einer Drehscheibe (5), die bezüglich einer im wesentlichen senkrechten Drehachse einen Umfangskranz (6) aufweist, der an seinem Umfang in wesentlichen parallel zur Drehachse ausgebildete Zellen (9, 46) aufweist, die auf einen Kreis (10) dieses Umfangskranzes gelichmäßig winklig verteilt angeordnet sind und diesen durchsetzen wobei der horizontale Querschnitt dieser Zellen und die Stärke des Kranzes etwa dem Volumen eines Kornes entsprechen, wobei die Zone des Umfangskranzes, die die Zellen aufweist, oberhalb einer festen Scheibe (11) versetzt ausgebildet ist, in der senkrecht zur Bahn der Zellen (9) der Drehscheibe Öffnungen (13) ausgebildet sind, die in Verbindung stehen mit einer Transportvorrichtung (14) für an eine Furche ausgeteilter Körner, ferner mit einer Absperrvorrichtung (23, 54), die oberhalb des Umfangskranzes (6) oberhalb jeder Öffnung der festen Scheibe angeordnet ist, um Körner zurückzuhalten, die nicht in die Zellen der Drehscheibe gelangt sind, dadurch gekennzeichnet, daß ein Abbremsmittel (18, 39, 52), das die Stärke der Körnerschicht auf dem Umfangskranz (6) begrenzt, im Weg der Körner von zentralen Teil der Drehscheibe (5), auf das die Körner gegeben werden, zum Teil des Umfangskranzes (16) angeordnet ist, wo die Absperrvorrichtung (23, 50) angeordnet ist.

2. Vorrichtung nach Anspruch 1, dadurch gekennzeichnet, daß der Umfangskranz (6) der Drehscheibe in dem die Zellen (9) ausgebildet sind, vom zentralen Teil der Scheibe durch eine darüber angeordnete, feste, zylindrische Wand (15) getrennt ist, in der oberhalb jeder Absperrvorrichtung ein Fenster (18) ausgebildet ist, das das Abbremsmittel zur Begrenzung der Stärke und des Volumens der Körnerschicht auf dem Umfangskranz (6) bildet, der die Zellen aufweist.

3. Vorrichtung nach Anspruch 2, dadurch gekennzeichnet, daß die Fenster (18) in der festen inneren Umfangswand (15) durch Ausnehmungen dieser zylindrischen Wand (15) gebildet werden, die sich bis zum unteren Rand derselben erstrecken.

4. Vorrichtung nach Anspruch 1, dadurch gekennzeichnet, daß die Stärke der Drehscheibe (5) im Bereich der Zellen geringer ist als die maximale Abmessung eines Kornes, daß die feste Scheibe (11) eine Ausnehmung (43) senkrecht zum Verteilungskreis der Zelle (9) aufweist, daß der Querschnitt dieser Ausnehmungen derart ist, daß ein Korn nur teilweise aufgenommen wird, wobei der Abstand (d) zwischen dem äußeren Rand dieser Ausnehmung und der Erzeugenden der zentralsten Zelle geringer ist als die maximale Abmessung eines Kornes, jedoch größer als dessen minimale Abmessung.

5. Vorrichtung nach Anspruch 4, dadurch gekennzeichnet, daß die Summe der Stärke (e) Drehscheibe (6) im Bereich der Zellen und die Tiefe (p) der Ausnehmung (43) geringer ist als die Summe der größten Abmessung eines Kornes und der Hälfte seiner kleinsten Abmessung.

6. Vorrichtung nach Anspruch 4, dadurch gekennzeichnet, daß jede der Zellen (9) der Drehscheibe (5) eine Abgabe zum Umfang der Drehscheibe darstellt.

7. Vorrichtung nach Anspruch 4, dadurch gekennzeichnet, daß die Absperrvorrichtung (22—23) so orientiert ist, daß Doppel bildende Körner in zentrifugaler Richtung verschoben werden, wobei eine feste Umfangswand (16), die den Umfang der Drehscheibe umgibt, bei (42) unmittelbar oberhalb der Absperrvorrichtung (22—23) und unterhalb des Abbremsmittels (39) unterbrochen ist zur Abgabe von Doppel bildenden Körnern, die das Abbremsmittel passiert haben und von der Absperrvorrichtung angehalten werden, an den Korntank.

8. Vorrichtung nach Anspruch 7, dadurch gekennzeichnet, daß das Abbremsmittel durch eine zweite Absperrvorrichtung (39) gebildet wird, deren Wirkebene auf einem etwas höheren Niveau liegt als das der ersten Absperrvorrichtung (22) und die oberhalb der ersten Absperrvorrichtung angeordnet ist.

9. Vorrichtung nach Anspruch 8, dadurch gekennzeichnet, daß die zweite Absperrvorrichtung (39) die Körner in eine zentripetale Richtung verschiebt, um sie von dem Umfangskranz (6) auf den zentralen Teil der Drehscheibe (6) zurückzubringen.

10. Vorrichtung nach Anspruch 4, dadurch gekennzeichnet, daß die senkrechten Wände der Zellen (9) die in der Drehscheibe (5) ausgebildet sind, sich teilweise in das Innere der Ausnehmung (43) der festen Scheibe (11) erstrecken.

11. Vorrichtung nach Anspruch 4, dadurch gekennzeichnet, daß die untere Fläche (45) des Umfangskranzes (6) der Drehscheibe zwischen dem Kreis, der durch die inneren Erzeugenden der Zellen hindurchgeht, eine kegelstumpfförmige, konvexe Form aufweist, wobei die Zellen eine Nut (46) bilden, die im Umfang der Drehscheibe mündet, und daß der Rand (44) der festen Scheibe (11) zwischen der Ausnehmung (43) und dem Umfang eine kegelstumpfförmige, konkave Form aufweist, die an die kegelstumpfförmige, konvexe Form der unteren Fläche der Drehscheibe (5) angepaßt ist.

12. Vorrichtung nach Anspruch 4, dadurch gekennzeichnet, daß die feste Scheibe (11) zwischen dem Abbremsmittel (52) und der Absperrvorrichtung (50), die oberhalb der Transportvorrichtung für die der Furche zugeteilten Körner angeordnet ist, einen außerhalb der Außenwand der Ausnehmung (43) gelegenen Umfangsrand aufweist, deren Fläche (54) gegen das Unterteil und nach außen geneigt ist.

13. Vorrichtung nach Anspruch 4, dadurch gekennzeichnet, daß die Absperrvorrichtung durch eine feste Wand (50) gebildet wird, die ein oben liegendes Profil in Form eines Streichbleches eines Pfluges aufweist, d.h. eine oben liegende, zum Innenrand der Ausnehmung (43) senkrechte Fläche, die sich nach hinten zum Umfang hin erweitert und neigt.

14. Vorrichtung nach Anspruch 10, dadurch gekennzeichnet, daß die senkrechten Wände der Zellen (9—46), die in der Drehscheibe (5) ausgebildet sind, sich zum Unterteil unterhalb des Niveaus des oberen Randes der äußeren Umgangswand erstrecken, welche die Ausnehmung (43) abgrenzt, deren Boden gebildet wird von dem an der festen Scheibe (11) ausgebildeten Umfangsteil, das unterhalb der Zellen angeordnet ist, die in Form von Nuten auf dem Umfang (46) münden und in der Drehscheibe (5) ausgebildet sind.

**Claims**

1. A distribution device (4) for single-seed drills of the type comprising a rotatable plate (5) extending into a peripheral rim (6) with a substantially vertical axis of rotation, having at its periphery recesses (9, 46) substantially parallel to the axis of rotation and regularly spaced angularly about a circle (10) of said rim through which they extend, the horizontal section of said recesses and the thickness of the rim corresponding substantially to the volume of a seed, the zone including the recesses of said peripheral rim moving above a fixed plate (11) in which are formed, directly below the path of travel of the rotatable plate recesses (9), openings (13) for communication with a transport device (14) of the seeds distributed down to the furrow, a barrier means (23, 50) being provided above the peripheral rim (6) upstream of each opening of the fixed plate to retain the seeds which are not engaged in the recesses of the rotatable plate, wherein a brake means (18, 39, 52) limiting the thickness of the layer of seeds on the peripheral rim (6) is interposed in the path of travel of the seeds passing from the central portion of the rotatable plate (5) on which said seeds are fed to the portion of the peripheral rim (6) where the barrier means (23, 50) is disposed.

2. A distribution device according to claim 1, wherein the peripheral rim (6) of the rotatable plate in which are provided the recesses (9) is separated from the central portion of the plate by a fixed cylindrical wall (15) disposed above and in which is provided, upstream of each barrier means, a window (18) forming the brake means limiting the thickness and the volume of the layer of seeds on the peripheral rim (6) carrying the recesses.

3. A distribution device according to claim 2, wherein the windows (18) formed in the internal fixed peripheral wall (15) are constituted by cut-outs from said cylindrical wall (15) extending to the lower edge thereof.

4. A distribution device according to claim 1, wherein the thickness of the rotatable plate (5) opposite the recesses is less than the maximum dimension of a seed, the fixed plate (11) comprising a throat (43) in vertical alignment with the distribution circle of the recesses (9), the section of said throat being such that a seed can only partially engage therein, the distance (d) between the outer edge of said throat and the centermost generating line of the recess being less than the maximum dimension of a seed, but greater than its minimum dimension.

5. A distribution device according to claim 4, wherein the sum of the thickness (e) of the rotatable plate (6) opposite the recesses and the depth (d) of throat (43) is less than the sum of the greatest dimension of a seed and of half its smallest dimension.

6. A distribution device according to claim 4, wherein each of the recesses (9) of the rotatable plate (5) has an outlet (46) toward the periphery of the rotatable plate.

7. A distribution device according to claim 4, wherein the barrier means (22—23) is oriented to displace the doubled seeds in the centrifugal direction, a fixed peripheral wall (16) surrounding the periphery of the rotatable plate being interrupted (at 42) immediately upstream of the barrier means (22—23) and downstream of the brake means (39) for the outflow of doubled seeds, which have passed the brake means and which are arrested by the barrier means, into the hopper.

8. A distribution device according to claim 7, wherein the brake means is constituted by a second barrier means (39) the plane of action of which is situated at a level slightly higher than that of the first barrier means (22) and which is disposed upstream of the first.

9. A distribution device according to claim 8, wherein the second barrier means (39) displaces the seeds in a centripetal direction to return them from the peripheral rim (6) onto the central portion of the rotatable plate (5).

10. A distribution device according to claim 4, wherein the vertical walls of the recesses (9) provided in the rotatable plate (5) are extended partially to the interior of throat (43) of the fixed plate (11).

11. A distribution device according to claim 4, wherein the lower face (45) of the peripheral rim (6) of the rotatable plate between the circle passing through the inner generating lines of the recesses and the periphery, has a convex frustoconical shape, the recesses which form a notch (46) opening at the periphery of the rotatable plate and the edge (44) of the fixed plate (11), between the throat (43) and the periphery, having a concave frustoconical shape adapted to the convex frustoconical shape of the lower face of the rotatable plate (5).

12. A distribution device according to claim 4, wherein the fixed plate (11) has, between the brake means (52) and the barrier means (50) located upstream of the transport device of the seeds distributed down to the furrow, a peripheral edge, beyond the external wall of throat (43), the surface (54) of which is inclined downwardly and outwardly.

13. A distribution device according to claim 4, wherein the barrier means is constituted of a fixed wall (50) having an upstream profile in the shape of a "plough mould board", viz. a substantially vertical upstream surface opposite the internal edge of the throat (43) and which widens and inclines rearwardly, toward the periphery.

14. A distribution device according to claim 10, wherein the vertical walls of the recesses (9—46) provided in the rotatable plate (5) extend downwardly below the level of the upper edge of the external peripheral wall defining the throat (43), the bottom of which is formed by the peripheral portion of the fixed plate (11) situated underneath the notch-shaped recesses which opens on the periphery (46) provided in the rotatable plate (5).

**Fig. 1**

0 037 337

Fig. 2

Fig. 3

2

Fig. 4  Fig. 5a  Fig. 5b  Fig. 5c

Fig. 6a  Fig. 6b  Fig. 6c  Fig. 6d

Fig. 7

Fig. 8

Fig. 9a
Fig. 9b
Fig. 9c
Fig. 9d
Fig. 9e
Fig. 9f

XII →

13-13'

48

50

*Fig:10*

XI

49

53

52

51

43

6

XII →

46

44

11

16

*Fig:11*

13'

48

50

46

52

13

53

11

*Fig:12*

50

48

6

X

X

46

44  53  54  43  11